# EUROPEAN PATENT APPLICATION

(11) **EP 4 628 287 A1**
(43) Date of publication of application: **08.10.2025**
(21) Application number: 24168562.7
(22) Date of filing: 04.04.2024
(51) Int. Cl.: B29C 70/32, B29C 53/82, B29C 53/60, F16J 12/00, B29C 33/48

(54) **COMPOSITE STRUCTURES**

(71) Applicant: Crompton Technology Group Limited, Oxfordshire, OX16 4XD (GB)
(72) Inventor: QUINN, Michael Joel, Banbury (GB); ASHWELL, James Alexander, Daventry (GB); CALLERY, Alfie Thomas John, Banburry (GB)
(74) Representative: Casalonga

(57) **Abstract**

A method of manufacturing a fibre-reinforced polymer structure is provided. The method comprises providing a tubular mandrel with a roughened outer surface having an average surface roughness of at least 2 µm; applying one or more tows of continuous fibre to the roughened outer surface of the tubular mandrel under tension and introducing a polymer matrix resin either with or to the continuous fibre; and curing the polymer matrix resin to form a tubular fibre-reinforced polymer casing. The roughened outer surface of the tubular mandrel provides a high friction interface with the one or more tows of continuous fibre to mitigate slipping as the one or more tows of continuous fibre are applied to the tubular mandrel.

## Description

### Technical Field

The present disclosure relates composite structures such as pressure vessels made from fibre-reinforced polymer.

### Background

Pressure vessels, such as those suitable for storing gaseous or liquid fuels, are commonly made from metals such as steel. However, pressure vessels made partially or entirely from composite materials have become increasingly popular due to potential weight savings.

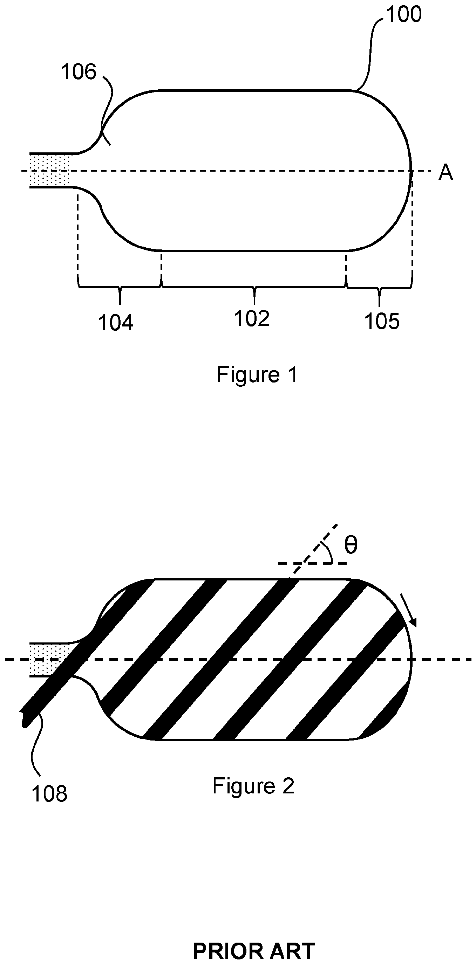

Composite structures such as pressure vessels can be made using fibre reinforced polymer (FRP). Figures 1 and 2 illustrate a conventional method for making FRP structures. A tubular mandrel 100 is provided, e.g. made of metal or polymer. The mandrel 100 extends along a central axis A. In the example shown in Figure 1, the mandrel 100 comprises a central cylindrical section 102, a domed open end section 104 and a domed closed end sections 105. The mandrel 100 has an outer surface 106 which defines the inner profile of the structure.

As shown in Figure 2, one or more tows 108 of continuous fibre (e.g. made of carbon, glass or Kevlar) are then wound around the mandrel 100 under tension to build up layers of fibre reinforcement. The tows 108 are often wound helically around the mandrel at an angle θ, to provide strength along expected load paths in the finished structure. When more than one tow 108 is used, the tows may be braided together as they are wound onto the mandrel 100. A polymer resin is either added separately or with the fibres and then cured to provide a polymer matrix that holds the fibres in place to form an FRP casing.

The tensile strength of the fibres used to form the structure can provide high strength in the direction they are oriented without being excessively heavy. This may, for instance, allow a lightweight FRP pressure vessel to operate with very large internal pressures. The finished casing may be removed from the mandrel 100 entirely before use, or part or all of the mandrel 100 may be retained as a liner in the finished FRP structure.

Obtaining optimal performance from FRP structures relies in part on accurate placement of the fibre tows 108 during manufacture. The positioning of the tows 108 is often automated. However, it can be difficult to achieve optimal fibre placements reliably for all structure shapes. For instance, when winding tows onto mandrels with curved or domed portions as shown in Figure 1, care must be taken with the winding angle θ to avoid the tow slipping away from its intended position and orientation under the winding tension (this potential slip is indicated by an arrow in Figure 2). An improved approach may be desired.

### Summary

According to a first aspect of the present disclosure there is provided a method of manufacturing a fibre-reinforced polymer structure, the method comprising:
providing a tubular mandrel with a roughened outer surface having an average surface roughness of at least 2 µm;
applying one or more tows of continuous fibre to the roughened outer surface of the tubular mandrel under tension and introducing a polymer matrix resin either with or to the continuous fibre; and
curing the polymer matrix resin to form a tubular fibre-reinforced polymer casing;
wherein the roughened outer surface of the tubular mandrel provides a high friction interface with the one or more tows of continuous fibre to mitigate slipping as the one or more tows of continuous fibre are applied to the tubular mandrel.

According to a second aspect of the present disclosure there is provided a fibre-reinforced polymer structure comprising
a fibre-reinforced polymer casing comprising one or more tows of continuous fibre held in a polymer matrix, the casing having an inner surface having an average surface roughness of at least 2 µm.

Thus, it will be recognised by those skilled in the art that, by using a roughened mandrel to provide a high friction interface with the continuous fibre tows, the tows may be applied reliably with orientations that may not be conventionally possible due to slip. This may allow the tows to be better aligned with expected loads on the finished structure, improving performance and/or allowing the size and/or weight of the structure to be reduced. Furthermore, the high friction interface may be useful for obtaining increased and/or full coverage of the mandrel with the fibre tows without necessarily forgoing optimal application angles.

Conventionally, mandrels to which fibre tows are applied have smooth surfaces. However, the inventors have recognised that the higher friction provided by a mandrel with a rough surface finish can actually produce more optimal parts due to increased flexibility in tow orientation and consistency of tow placement. The use of a roughened mandrel may also enable the production of more complex component geometries.

Applying the one or more tows of continuous fibre may comprise filament winding, where the mandrel rotates to draw one or more tows of fibre onto the mandrel, or braiding, in which multiple tows are braided onto the mandrel.

In a set of examples, the roughened outer surface of the mandrel is prepared by roughening an initially smooth surface (e.g. a machined or cast surface). The method may comprise providing a tubular mandrel with a smooth outer surface (e.g. with an average surface roughness of less than 2 µm, e.g. less than 1 µm) and roughening the outer surface using one or more of: grit blasting, chemical etching or knurling. In a set of examples, the outer surface is grit blasted with a grit size of 120 or less, 100 or less, 80 or less or 60 or less (e.g. approximately 50-55 grit size). Grit blasting may be used to provide a controllable and predictable surface roughness relatively quickly and at relatively low cost.

The average surface roughness may be understood to be an average of deviations from a mean surface profile of the outer surface (Ra). In some examples, the roughened outer surface has an average surface roughness of at least 3 µm, at least 5 µm, at least 7 µm or at least 9 µm. The roughened outer surface may have an average surface roughness of 4 µm or less, 6 µm or less, 8 µm or less or 10 µm or less.

The mandrel may be formed from any suitable material known in the art *per se.* In a set of examples the mandrel comprises a metal (e.g. steel) or a polymer (e.g. nylon). The mandrel may comprise several parts, or may be a monolithic structure.

As explained above, the use of a high friction outer surface can alleviate slipping as the tow(s) is/are applied to the mandrel (i.e. relative movement of a portion of the tow relative to the mandrel after the portion has made full contact with the mandrel) . A high friction interface may be understood to mean an interface having a higher coefficient of friction than that between a conventional smooth mandrel and continuous fibre tows (e.g. at least 20% higher, at least 50% higher, at least 75% higher or at least 100% higher). The interface may have a coefficient of friction of at least 0.4, at least 0.6, at least 0.8 or at least 1.

The high friction interface may prevent or minimise slip that would be incurred between a conventional smooth mandrel and continuous fibre tows under the same application conditions (e.g. same materials, dimensions, winding angle and tension).

The mitigation of slip can be useful for all types and shapes of mandrel. In some examples, the mandrel extends along a central axis. The central axis may be a application axis about which the tows are applied to the mandrel (e.g. a winding axis). The mandrel may comprise an outer surface with a constant profile (e.g. a cylinder of constant diameter, symmetric about the central axis). In some examples the mandrel may have a more complex shape, for which avoiding slip can be particularly useful.

In a set of examples the mandrel comprises at least one portion in which the outer surface extends at an oblique angle to the central axis (e.g. extending towards or away from the central axis (e.g. a tube with a narrowing or widening section). In some examples, the mandrel comprises at least one portion in which the outer surface curves towards or away from the central axis. The mandrel may comprise one or more portions in which the outer surface is convex. For instance, the mandrel may comprise one or more domed end portions.

As explained above, providing a high friction interface between the tow(s) and the mandrel may facilitate application of the tow(s) at more extreme angles. In a set of examples, the method comprises applying one or more tows of fibre reinforcement to the mandrel at an angle of more than 40° to the central axis, more than 50° to the central axis or more than 60° to the central axis.

Applying the fibre tows to the tubular mandrel and introducing and curing the polymer matrix forms a fibre-reinforced polymer structure having an inner surface that corresponds to the outer surface of the mandrel. In some examples, the fibre tows are applied roughly evenly across the mandrel such that the fibre-reinforced polymer casing has a substantially constant wall thickness and an outer surface which also corresponds to the shape of the mandrel. Even in examples where the wall thickness is not constant (e.g. with additional fibre being positioned in areas requiring additional reinforcement), the shape of the outer surface of the resulting FRP casing may largely correspond to the shape of the mandrel.

In a set of examples, the fibre-reinforced polymer structure is a pressure vessel, e.g. for storing liquid or gases such as fuels under higher-than-atmospheric pressure. The pressure vessel may comprise a capacity of 0.2 L or more, 0.5 L or more, 1 L or more, 5 L or more, 10 L or more, 30 L or more or 50 L or more. The pressure vessel may comprise a capacity of 500L or less, 100 L or less, 50 L or less, 30 L or less, 10 L or less, 5 L or less or 1 L or less. The pressure vessel may have an external diameter of 1 m or less, 50 cm or less or 25 cm or less. The pressure vessel may have maximum internal operational pressure of 10 bar or more, 50 bar or more, 100 bar or more, 250 bar or more or 500 bar or more. The fibre-reinforced polymer structure may comprise a type III, type IV or type V pressure vessel.

The roughened outer surface may extend over the entire mandrel, i.e. the whole exterior of the tubular mandrel may be roughened. However, this is not essential and in some examples the mandrel also comprises a smooth outer surface in one or more areas. These may simply be areas to which no fibre tows are applied (e.g. end sections of the tubular mandrel). However, in some examples the method comprises applying one or more tows of continuous fibre to the smooth outer surface of the tubular mandrel under tension. In such examples, it may not be necessary to use a rough surface in all areas to obtain a sufficient increase in friction, e.g. for a particularly geometry of mandrel.

The smooth and roughened outer surfaces may comprise alternating stripes or patches on the tubular mandrel. In some examples, the roughened outer surface is provided in areas of the mandrel that may particularly benefit from high friction (e.g. convex or domed sections), whilst other areas of the mandrel (e.g. cylindrical sections) are smooth.

The polymer matrix resin may be introduced with the tow(s) of continuous fibre. For instance, the method may comprise a wet process in which one or more tows of continuous fibre are dipped into a liquid resin bath prior to being applied to the mandrel (e.g. a wet winding or braiding process). Additionally or alternatively, polymer matrix resin may be pre-impregnated into one or more tows of continuous fibre before they are applied (e.g. a towpreg winding process).

The polymer matrix resin may, additionally or alternatively, be introduced to the continuous fibre after they are applied. The polymer matrix resin may be introduced in a mould. The method may comprise applying one or more tows of dry fibre reinforcement to the mandrel, placing the mandrel and fibre into a mould and then injecting the polymer matrix resin into the mould. A vacuum may be applied to the mould to aid resin injection. The method may comprise a resin transfer moulding (RTM) process.

Examples of the present disclosure may use any suitable fibre reinforcement known in the art *per se* such as carbon fibres, glass fibres or aramid fibres.

Continuous tows of fibre reinforcement is used herein to refer to fibre reinforcement in which at least some individual constituent filaments have a substantial length, i.e. they are not short "chopped fibres" or discontinuous fibres. In at least some examples, the fibre reinforcement may be considered to be "continuous" when the fibres or filaments have a length on the same scale as the finished fibre-reinforced polymer casing. This means that the fibre reinforcement is substantially "continuous" when it is long enough to extend uninterrupted across most or all of a given dimension of the casing, such as a length, radius or circumference.

In some examples, the one or more tows of continuous fibre are applied circumferentially or helically around the mandrel, e.g. perpendicular to a central axis along which the mandrel extends. The continuous tow(s) of fibre reinforcement may comprise at least some individual constituent filaments which extend around a significant fraction of the tubular mandrel (and accordingly around a significant fraction of the resulting FRP casing), e.g. extending 90°, 180°, 270° or more around the mandrel. In some examples, the tow(s) may comprise at least some individual constituent filaments which extend entirely around the tubular mandrel, e.g. at least 360° around the mandrel, and possible even make several complete loops around the mandrel.

The polymer matrix resin may comprise a thermosetting polymer, such as an epoxy or phenolic resin. Alternatively, the polymer matrix resin may comprise a thermoplastic polymer, such as polyphenylene sulfide (PPS), polyether ether ketone (PEEK), polyetherketoneketone (PEKK), polyetherketone (PEK) or another polymer that is part of the polyaryletherketone (PAEK) family.

In some examples, the method comprises removing the fibre-reinforced casing from the mandrel (e.g. after the curing step). This may comprise washing, burning or dissolving out part or all of the mandrel from inside the fibre-reinforced polymer casing, or any other suitable means of removal. In examples where the mandrel is removed, the fibre-reinforced polymer casing may provide the inner surface of the resulting fibre-reinforced polymer structure. This approach may be used to produce a type V composite pressure vessel. It will be appreciated that in such examples, the inner surface of the resulting fibre-reinforced polymer structure will have a roughness corresponding to the roughness of the mandrel that was used to produce it.

Alternatively, in some examples, part or all of the mandrel is retained inside the fibre-reinforced polymer casing. The retained part(s) of the mandrel may form a tubular liner inside the resulting fibre-reinforced polymer structure (e.g. in fibre-reinforced polymer structures according to the second aspect). In such examples, the tubular liner will have the roughened outer surface having an average surface roughness of at least 2 µm, and the inner surface of the FRP casing is adjacent the roughened outer surface. The tubular liner may form a fluid barrier. This approach may be used to produce a type III or IV composite pressure vessel.

In some examples where part or all of the mandrel is retained inside the casing to form a tubular liner, it will be recognised that, in the finished structure, the tubular liner has a roughened outer surface having an average surface roughness of at least 2 µm. In such examples, the fibre-reinforced polymer casing comprises an inner surface adjacent the roughened outer surface and having a surface roughness of at least 2 µm.

Features of any aspect or example described herein may, wherever appropriate, be applied to any other aspect or example described herein. Where reference is made to different examples, it should be understood that these are not necessarily distinct but may overlap. It will be appreciated that the optional features of the fibre-reinforced polymer structure described with reference to the method of the first aspect may also, where appropriate, apply to the second aspects of the disclosure.

### Detailed Description

One or more non-limiting examples will now be described, by way of example only, and with reference to the accompanying figures in which:
Figure 1 is a schematic diagram of a conventional tubular mandrel for manufacturing an FRP structure;
Figure 2 is a schematic diagram of fibre tows being wound onto the tubular mandrel of Figure 1;
Figure 3 is a schematic diagram of a tubular mandrel for use in examples of the present disclosure;
Figures 4 and 5 shows various steps in a method of making a fibre-reinforced polymer structure according to an example of the present disclosure;
Figure 6 is a schematic diagram of another tubular mandrel for use in examples of the present disclosure;
Figure 7 is a schematic diagram of an FRP structure according to an example of the present disclosure; and
Figures 8 and 9 are schematic cutaway diagrams of the FRP structure of Figure 7.

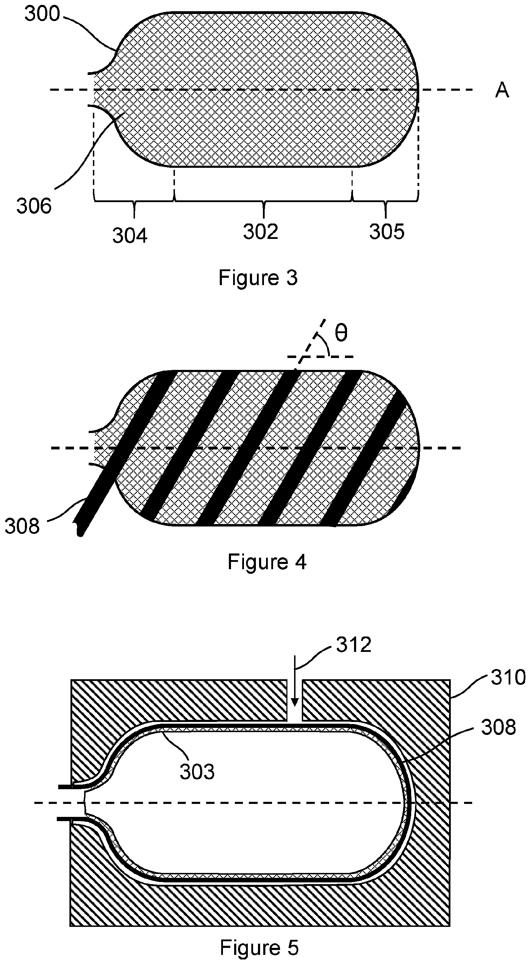

Figure 3 shows a tubular mandrel 300 extending along a central axis A and comprising a cylindrical section 302, a domed open end section 304 and a domed closed end section 305.

A method of making a fibre reinforced polymer (FRP) pressure vessel using the mandrel 300 will now be described with additional reference to Figures 4 and 5.

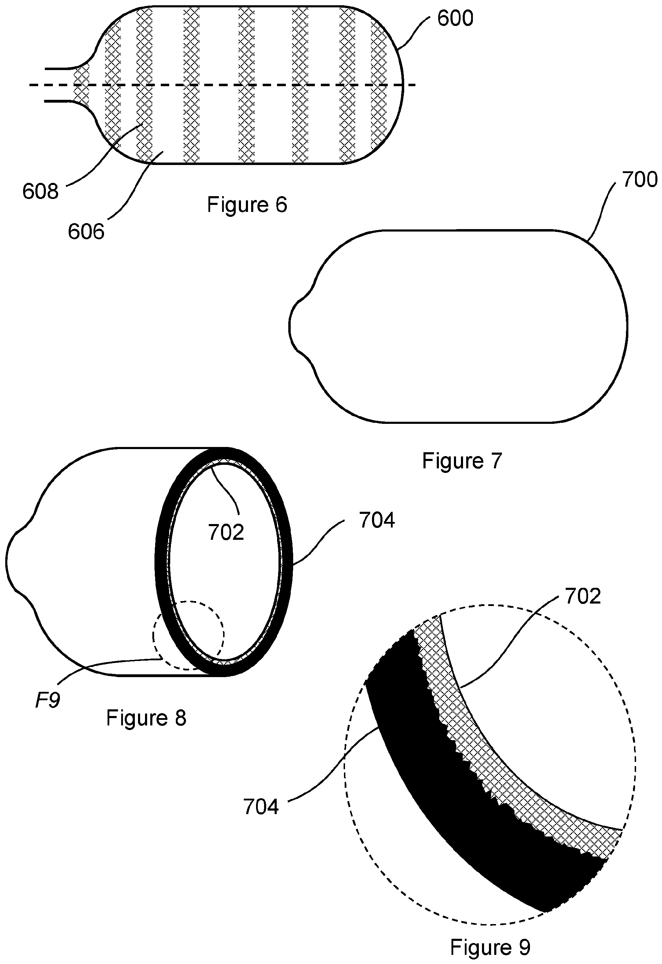

In a first step, the outer surface 306 of the mandrel 300 is treated by grit blasting (e.g. using 53 grit size) to give it a roughened texture with an average surface roughness Ra of approximately 10 µm. Figure 6 shows an alternative mandrel 600 which is only partially roughened. The exterior of the mandrel 600 comprises several areas in which the mandrel 600 has a smooth outer surface 606 and several sections in which the mandrel has a roughened outer surface 608. The desired pattern of roughened sections 608 may be achieved by masking off some areas of the mandrel prior to grit blasting or by otherwise controlling the application of grit blasting to specific areas.

As illustrated in Figure 4, one or more tows 308 of continuous fibre (e.g. carbon fibres) are then wound in tension onto the mandrel 300 to build up layers of fibre reinforcement. When more than one tow 308 is used, the tows may be braided together as they are wound onto the mandrel 300.

Because the outer surface 306 of the mandrel 300is rough, it provides a high friction interface with the tows as they are wound onto the mandrel 300. The tows 308 can be wound onto the mandrel 300 with a higher winding angle θ than that which is possible with conventional smooth mandrels (e.g. at an angle of 60° or more to the central axis). It has been found that grit blasting with 53 grit size can produce an outer surface with roughly double the friction of an untreated mandrel. This can mitigate the tows 308 slipping off the domed end sections 304, 305 and bunching as they are wound.

Once all of the necessary fibre has been applied to the mandrel 300, it is placed into a mould 310 (shown in Figure 5) and a thermosetting polymer resin 312 is introduced into the fibre 308. Alternatively, the polymer resin may be applied to the mandrel 300 with the fibre tows, e.g. by using pre-impregnated tows (towpreg) or passing the tows through a resin bath prior to winding (wet winding). Heat and pressure is then applied to consolidate and cure the fibre-resin composite to form the casing of a fibre-reinforced polymer pressure vessel.

Once the casing has been cured, the mandrel 300 is retained in the casing as a fluid liner.

Figures 7, 8 and 9 illustrate an example of a fibre-reinforced polymer pressure vessel 700 according to an example of the present disclosure. Figure 9 is a magnified view of the section labelled F9 in Figure 8. The pressure vessel 700 is made by the method described above.

The pressure vessel 700 comprises an inner liner 702 and an FRP casing 704. The FRP casing 704 is made from continuous tows of reinforcing fibre held within a polymer matrix. The pressure vessel 700 may have an internal volume of between 0.5 L and 500 L (e.g. for holding gaseous or liquid fuel), and be arranged to operate . with a maximum internal pressure of 10-1000 bar.

The FRP casing 704 has an inner surface that is in contact with an outer surface of the liner 702. The inner and outer surfaces have an average surface roughness of approximately 10 µm. As explained above, this is the result of the fibre tows being wound onto the roughened liner 702 acting as a mandrel during manufacture.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A method of manufacturing a fibre-reinforced polymer structure, the method comprising:
providing a tubular mandrel with a roughened outer surface having an average surface roughness of at least 2 µm;
applying one or more tows of continuous fibre to the roughened outer surface of the tubular mandrel under tension and introducing a polymer matrix resin either with or to the continuous fibre; and
curing the polymer matrix resin to form a tubular fibre-reinforced polymer casing;
wherein the roughened outer surface of the tubular mandrel provides a high friction interface with the one or more tows of continuous fibre to mitigate slipping as the one or more tows of continuous fibre are applied to the tubular mandrel.

2. The method of claim 1, wherein applying the one or more tows of continuous fibre comprises filament winding or braiding.

3. The method of claim 1 or 2, comprising providing a tubular mandrel with a smooth outer surface and roughening the outer surface using one or more of: grit blasting, chemical etching or knurling.

4. The method of claim 3, comprising roughening the outer surface by grit blasting with a grit size of 120 or less.

5. The method of any preceding clam, wherein the roughened outer surface has an average surface roughness of at least 5 µm.

6. The method of any preceding clam, wherein the high friction interface has a coefficient of friction of at least 0.4.

7. The method of any preceding clam, wherein the mandrel extends along a central axis about which the tows are applied to the mandrel.

8. The method of clam 7, wherein the mandrel comprises at least one portion in which the outer surface curves towards or away from the central axis.

9. The method of claim 7 or 8, comprising applying one or more tows of fibre reinforcement to the mandrel at an angle of more than 40° to the central axis.

10. The method of any preceding clam, wherein the fibre-reinforced polymer structure is a pressure vessel.

11. The method of clam 10, wherein the pressure vessel has a capacity of 500 L or less and/or a maximum internal operational pressure of 10 bar or more.

12. The method of any preceding clam, wherein the mandrel also comprises a smooth outer surface in one or more areas.

13. The method of any preceding clam, comprising removing the fibre-reinforced casing from the mandrel.

14. A fibre-reinforced polymer structure comprising
a fibre-reinforced polymer casing comprising one or more tows of continuous fibre held in a polymer matrix, the casing having an inner surface having an average surface roughness of at least 2 µm.

15. The fibre-reinforced polymer structure of claim 14, comprising a tubular liner with a roughened outer surface having an average surface roughness of at least 2 µm, wherein the inner surface of the fibre-reinforced polymer casing is adjacent the roughened outer surface of the tubular liner.
